# FASCICULE DE BREVET EUROPEEN

(11) **EP 1 089 947 B1**
(45) Date de publication et mention de la délivrance du brevet: **29.10.2003**
(21) Numéro de dépôt: 99924598.8
(22) Date de dépôt: 04.06.1999
(51) Int. Cl.: C03C 17/36

(54) **SUBSTRAT TRANSPARENT REVETU D'UNE COUCHE D'ARGENT**
DURCHSICHTIGES SUBSTRAT MIT SILBERBESCHICHTUNG
TRANSPARENT SUBSTRATE COATED WITH A SILVER DEPOSIT

(30) Priorité: 08.06.1998 EP 98110439
(43) Date de publication de la demande: 11.04.2001
(73) Titulaire: GLAVERBEL, 1170 Bruxelles (BE)
(72) Inventeur: NOVIS, Yvan, B-5031 Grand-Leez (BE); DEPAUW, Jean-Michel, B-1083 Bruxelles (BE); DECROUPET, Daniel, B-5070 Fosses-la-Ville (BE)
(74) Mandataire: Farmer, Guy
(86) Numéro de dépôt international: BE9900071
(87) Numéro de publication internationale: WO99064362

(56) Documents cités:
- EP-A- 0 718 250
- EP-A- 0 745 569
- EP-A- 0 761 618
- FR-A- 2 641 271

## Description

La présente invention se rapporte à un substrat transparent, en particulier à une feuille transparente revêtue, capable de supporter un traitement thermique de type trempe ou bombage sans dégradation du revêtement et destinée par exemple à être incorporée à un vitrage multiple ou feuilleté.

Plusieurs des termes utilisés pour décrire les propriétés d'un substrat revêtu ont des sens précis définis par une norme appropriée. Ceux utilisés dans la présente description comprennent les termes suivants, dont la plupart sont définis par la Commission Internationale de l'Eclairage («CIE»).

Dans la présente description, on utilise deux illuminants standard: l'Illuminant C et l'Illuminant A, tels que définis par la CIE. L'Illuminant C représente la lumière du jour moyenne d'une température de couleur de 6700K. L'Illuminant A représente le rayonnement d'un radiateur de Planck à une température d'environ 2856K Cet illuminant représente la lumière émise par des phares de voiture et est essentiellement utilisé pour évaluer les propriétés optiques de vitrages de véhicules.

Le terme "transmission lumineuse" (TLA) utilisé ici est tel que défini par la CIE, à savoir le flux lumineux transmis à travers un substrat en tant que pourcentage du flux lumineux incident de l'Illuminant A.

Le terme "transmission énergétique" (TE) utilisé ici est tel que défini par la CIE, à savoir l'énergie totale directement transmise à travers un substrat sans changement de longueur d'onde. Il exclut l'énergie absorbée par le substrat (AE).

Le terme "pureté de couleur" (P) utilisé ici se réfère à la pureté d'excitation mesurée avec l'Illuminant C tel que défini dans le Vocabulaire International de l'Eclairage de la CIE, 1987, pages 87 et 89. La pureté est définie selon l'échelle linéaire dans laquelle une source définie de lumière blanche a une pureté de zéro et la couleur pure a une pureté de 100%. Pour des fenêtres de véhicules la pureté du substrat revêtu est mesurée depuis la face externe de la fenêtre.

Le terme "longueur d'onde dominante" (λ_{D}) utilisé ici désigne la longueur de l'onde de crête dans la gamme transmise ou réfléchie par le substrat revêtu.

Le terme "matière non absorbante" utilisé ici désigne une matière dont l'indice de réfraction [n(λ)] est supérieur à la valeur de l'indice d'absorption spectrale [k(λ)] sur la totalité du spectre visible (380 à 780 nm).

Le terme "émissivité" (ε) utilisé ici désigne l'émissivité normale d'un substrat tel que définit dans le Vocabulaire International de l'Eclairage de la CIE.

Le terme "voile" utilisé ici désigne le pourcentage de lumière diffuse transmise par un matériau, mesuré selon la norme ASTM D 1003.

Les coordonnées de Hunter L, a, b utilisées ici mesurent la coloration d'un matériau telle que perçue par un observateur. Elles sont définies et mesurées selon la norme ASTM D 2244.

Il est devenu de plus en plus courant d'appliquer à des feuilles de verre plusieurs couches de revêtement, formant un empilement, pour modifier les propriétés de transmission et de réflexion de ces feuilles de verre. Des propositions antérieures de couches de métal et de matériaux diélectriques en de nombreuses combinaisons différentes ont été faites pour conférer au verre des propriétés optiques et énergétiques choisies.

Les vitrages utilisés dans le domaine automobile en particulier adoptent des formes de plus en plus complexes qui requièrent que les feuilles de verre qui entrent dans leur composition subissent un traitement thermique de bombage. Dans le domaine architectural également il est de plus en plus demandé que les vitrages adoptent des formes courbes ou que des feuilles de verre qu'ils comprennent aient subi une trempe thermique pour des raisons de résistance aux chocs et donc de sécurité. Or, la plupart des revêtements destinés à être déposés sur des feuilles de verre, surtout ceux déposés sous vide, sont incapables de résister de manière satisfaisante à de tels traitements thermiques. En particulier, leurs propriétés optiques se dégradent sensiblement durant de tels traitements. Dès lors, il est nécessaire d'appliquer les couches de revêtement sur les feuilles de verre après qu'elles aient adopté leur forme définitive ou qu'elles aient subi une trempe thermique, ce qui nécessite, en particulier dans le cas de verre bombé, des installations de dépôt particulièrement complexes. En effet, ces installations doivent permettre le dépôt de couches uniformes sur des substrats non plans.

Certaines propositions ont été faites pour palier cet inconvénient en utilisant des revêtements qui incorporent des couches constituées de matériaux capables lorsque le substrat revêtu est porté aux températures nécessaires à un traitement thermique de bombage ou de trempe, de prévenir la dégradation des propriétés optiques de l'empilement pendant la durée dudit traitement thermique.

Cette dégradation pourrait être notamment due d'une part à la diffusion d'oxygène de l'atmosphère ou des couches diélectriques à l'intérieur de l'empilement, aboutissant à l'oxydation des couches métalliques qu'il contient, et d'autre part à la diffusion de sodium du substrat de verre dans les couches inférieures de l'empilement.

La demande de brevet européen n° 761618 décrit un procédé de dépôt par pulvérisation cathodique de couches sur un substrat de verre, selon lequel la ou les couches métalliques fonctionnelles sont entourées de couches de protection constituées de matériaux aptes à fixer l'oxygène par oxydation, en particulier le niobium. L'absence de dégradation des couches métalliques est également due selon ce document au dépôt de la couche d'argent sous une atmosphère réactive comprenant au moins 10% d'oxygène.

La demande de brevet européen n° 336257 décrit un substrat de verre revêtu d'un empilement capable de résister aux traitements thermiques comprenant deux couches métalliques disposées alternativement avec trois couches diélectriques à base de stannate de zinc. La première couche métallique est entourée de couches de protection en titane et la seconde couche métallique est surmontée d'une couche de protection également constituée de titane. Ce matériau protège les couches métalliques en cours de traitement thermique en s'oxydant par combinaison avec les atomes d'oxygène diffusant dans l'empilement.

La demande de brevet européen n° 303109 décrit un substrat de verre revêtu d'un empilement comprenant une couche d'argent entourée de deux couches d'un alliage de nickel et de chrome, elles-mêmes entourées de deux couches d'un oxyde métallique particulier. Ce produit est destiné à subir un traitement thermique de bombage sous atmosphère oxydante durant lequel sa transmission lumineuse augmente sensiblement.

Le brevet américain n° 5584902 décrit un procédé de dépôt par pulvérisation cathodique sur un substrat de verre d'un revêtement capable de résister à un traitement thermique de type trempe ou bombage, comprenant une couche d'argent entourée de deux couches d'un alliage de nickel et de chrome, elles-mêmes entourées de deux couches de nitrure de silicium.

Des empilements tels que proposés par ces documents comprennent des couches de protection des couches fonctionnelles métalliques composée elles-mêmes de métal non-oxydé avant un traitement thermique de type trempe ou bombage. Ces couches de protection vont s'oxyder en cours de traitement thermique, de sorte que les propriétés optiques du substrat revêtu vont être considérablement modifiées durant ce traitement. D'autre part, il est nécessaire que ces couches de protection ne soient pas oxydées jusqu'à leur interface avec les couches métalliques fonctionnelles, afin que celles-ci ne subissent pas elles-mêmes d'oxydation. Ceci est défavorable à l'obtention d'une transmission lumineuse élevée du produit fini.

La présente invention se rapporte à un substrat transparent portant un revêtement comprenant au moins une couche métallique constituée d'argent ou d'alliage d'argent, chaque couche métallique étant en contact avec deux couches diélectriques transparentes non absorbantes, le substrat revêtu étant destiné à subir un traitement thermique de type trempe ou bombage, caractérisé en ce qu'avant ledit traitement thermique, chacune des couches diélectriques comprend une sous-couche à base d'un alliage sous-oxydé de deux métaux.

Nous avons découvert que de façon surprenante, la présence dans un empilement selon l'invention de sous-couches à base d'un alliage de deux métaux sous oxydé avant traitement thermique protègent chaque couche métallique de l'empilement, ce qui permet d'obtenir un produit résistant particulièrement bien à ce traitement. On a également constaté que la transmission lumineuse du substrat revêtu au terme dudit traitement est plus élevée que lorsque des couches de protection métalliques sont utilisées. En effet, les sous-couches à base d'un alliage de deux métaux selon l'invention n'étant pas totalement oxydées avant traitement thermique, elles permettent l'absorption de l'oxygène diffusant dans l'empilement durant ce traitement et protègent donc les couches métalliques de toute oxydation. D'autre part, du fait que ces sous-couches sont sous-oxydées sur toute leur épaisseur avant le traitement thermique, la transmission lumineuse du produit après ce traitement est plus importante que si des sous-couches du même alliage non-oxydé avant traitement thermique avaient été utilisées. Par ailleurs, la structure elle-même de sous-couches de protection sous-oxydées en cours de dépôt est plus favorables aux propriétés optiques du produit fini que lorsque ces sous-couches ne sont oxydées que durant le traitement thermique consécutif au dépôt de l'empilement.

De préférence, les sous-couches à base d'un alliage de deux métaux comprennent du Ni et du Cr. Cet alliage une fois oxydé en cours de dépôt et de traitement thermique, présente une transparence plus élevée que celle de sous-couches à base d'alliages d'autres métaux. En outre, l'utilisation d'un alliage de Ni et Cr permet au produit fini, en combinaison avec les différentes couches de l'empilement, de présenter des propriétés optiques avantageuses.

Selon une forme préférée de l'invention, au moins la sous-couche à base d'un alliage de deux métaux la plus éloignée du substrat est surmontée d'une sous-couche comprenant un composé nitruré, de préférence un nitrure de Si, d'Al ou d'un alliage de ces éléments. De tels matériaux jouent le rôle de barrière à la diffusion d'oxygène dans l'empilement et limitent par conséquent la quantité de cet élément aboutissant à la sous-couche à base d'un alliage de deux métaux sous-jacente. Ceci est avantageux car rend possible de procéder à un traitement thermique dans des conditions très oxydantes sans devoir épaissir les sous-couches à base d'un alliage de deux métaux. En surmontant ladite sous-couche à base d'un alliage de deux métaux d'une sous-couche d'un composé nitruré, la sous-couche ainsi recouverte est alors toujours capable d'absorber la totalité de l'oxygène qui l'atteint et conserve ainsi son effet de protection de la couche métallique sous-jacente.

Dans une forme préférée d'un produit selon l'invention, au moins une couche métallique est en contact avec une sous-couche sous-jacente composée d'un oxyde d'un métal, notamment choisi parmi le Ti, le Ta, le Nb et le Sn. Ces métaux présentent une structure cristalline qui favorise la recristallisation de l'Ag durant le traitement thermique selon un mode tel que substantiellement aucun voile visible n'apparaisse dans le produit fini. Ceci est avantageux car lorsqu'un empilement comprenant une couche métallique est soumis à un traitement thermique de type trempe ou bombage, la structure cristalline de cette couche subit des modifications qui peuvent se traduire macroscopiquement par l'apparition d'un voile dans l'empilement, visible dans le produit fini. Un tel voile est considéré comme inesthétique.

Avantageusement, au moins la sous-couche à base d'un alliage de deux métaux la plus proche du substrat est en contact avec une sous-couche sous-jacente d'oxyde de Ti. Ceci est avantageux car les propriétés optiques d'un empilement destiné à subir un traitement thermique de type trempe ou bombage peuvent être détériorées par la diffusion dans les couches inférieures de cet empilement de sodium migrant depuis les couches superficielles du substrat de verre. L'oxyde de Ti présente des propriétés propres à bloquer cette migration.

De préférence, la couche diélectrique en contact avec le substrat est constituée de sous-couches d'oxydes de métaux et d'alliages de métaux. Cette couche étant la plus éloignée de la principale source de diffusion d'oxygène dans l'empilement durant un traitement thermique, à savoir l'atmosphère, il n'est pas indispensable qu'elle comprenne une sous-couche de nitrure destinée à bloquer la diffusion en question.

Dans une autre forme préférée de l'invention, chaque couche métallique de l'empilement est composée d'un alliage d'Ag et de Pt ou de Pd. L'adjonction d'un de ces éléments à l'Ag confère à l'empilement une meilleure tenue à la corrosion due à l'humidité ambiante.

Les couches de revêtement peuvent être complétées par une couche mince (2-5 nm) terminale qui procure à l'empilement une durabilité chimique et/ou mécanique améliorée, sans altération sensible de ses propriétés optiques. Des oxydes, nitrures et oxynitrures de silicium, d'aluminium ou d'un alliage de ces éléments conviennent à cet effet. La silice (SiO₂) est généralement préférée.

Lorsqu'un empilement selon l'invention comprend une seule couche métallique, de préférence l'épaisseur optique de la couche diélectrique la plus proche du substrat est comprise entre 50 et 90 nm, celle de l'autre couche diélectrique entre 70 et 110 nm, celle des sous-couches à base d'un alliage de deux métaux entre 3 et 24 nm et l'épaisseur géométrique de la couche métallique entre 8 et 15 nm. Ces gammes d'épaisseurs permettent d'obtenir un substrat revêtu qui présente après un traitement thermique de type trempe ou bombage, un niveau de voile inférieur à 0,3 %.

Un tel empilement déposé sur un substrat de verre sodocalcique clair de 4 mm d'épaisseur confère de préférence à ce dernier après un traitement de type trempe ou bombage une TLA supérieure à 77 %, une émissivité inférieure à 0,08, de préférence inférieure à 0,05, une longueur d'onde dominante en réflexion de 450 à 500 nm, de manière plus préférée de 470 à 500 nm, et une pureté de couleur en réflexion de 5 à 15 %.

De préférence, les épaisseurs des couches et sous-couches d'un revêtement selon l'invention comprenant une seule couche métallique choisies parmi les épaisseurs préférées sont telles qu'en cours de traitement thermique, la variation de TLA du substrat revêtu soit inférieure à 10 %, celle de sa longueur d'onde dominante en réflexion ne dépasse pas 3 nm et celle de sa pureté de couleur en réflexion ne dépasse pas 5 %.

Un tel produit peut entrer dans la fabrication de vitrages multiples dits à faible émissivité pour bâtiments. Dans ce cas, il est associé à au moins une feuille de matière vitreuse transparente de laquelle il est séparé par un volume gazeux délimité par un espaceur périphérique. Dans un tel vitrage, la surface revêtue est dirigée vers l'espace gazeux. Dans le cas de l'utilisation architecturale d'un produit selon l'invention, l'empilement pourra ne comprendre qu'une seule couche métallique.

Il est remarquable que l'émissivité après un traitement de trempe thermique des substrats revêtus selon l'invention est du même ordre de grandeur que celle de vitrages dits à basse émissivité classiques, c'est à dire n'ayant pas subi de traitement thermique, laquelle est généralement inférieure à 0.10, dans le cas de revêtements déposés par pulvérisation cathodique, pour des TLA4 de l'ordre de 80%. Des vitrages multiples incorporant une feuille de verre revêtue selon l'invention et ayant subi un traitement thermique de type trempe ou bombage, offrent donc des qualités optiques équivalentes à celles de tels vitrages comprenant une feuille de verre revêtue n'ayant pas subi de traitement thermique tout en présentant lorsque le substrat revêtu est trempé, une meilleure résistance mécanique aux chocs et en offrant une sécurité accrue aux occupants des locaux dans lesquels ces vitrages sont installés.

Lorsqu'un empilement selon l'invention comprend deux couches métalliques, de préférence l'épaisseur optique de la couche diélectrique la plus proche du substrat est comprise entre 50 et 80 nm, celle de la couche diélectrique la plus éloignée du substrat entre 40 et 70 nm, celle de la couche diélectrique intermédiaire entre 130 et 170 nm, celle des sous-couches à base d'un alliage de deux métaux entre 3 et 24 nm et l'épaisseur géométrique des couches métalliques entre 8 et 15 nm.

Un tel empilement déposé sur un substrat de verre sodocalcique clair de 2,1 mm d'épaisseur confère à ce dernier après un traitement thermique de trempe ou de bombage, un niveau de voile inférieur à 0,5 % et une TLA de plus de 76%, une longueur d'onde dominante en réflexion comprise entre 450 et 500 nm, de manière plus préférée de 470 à 500 nm, et une pureté de couleur en réflexion comprise entre 5 et 15 %.

Un tel produit peut entrer dans la composition d'un vitrage multiple. Il est aussi avantageusement utilisé dans la composition d'un vitrage feuilleté, en particulier un pare-brise de véhicule. Pour des pare-brise de véhicules l'exigence légale de transmission lumineuse (TLA) est d'au moins 70% aux USA et d'au moins 75% en Europe. Vis-à-vis du rayonnement solaire, l'énergie totale directement transmise (TE) est de préférence inférieure à 50%. Un autre facteur est la coloration du substrat revêtu qui doit répondre aux exigences imposées en la matière par l'industrie automobile. Ce sont de tels impératifs qui imposent généralement que le revêtement selon l'invention appliqué sur l'une des feuilles de verre d'un vitrage feuilleté destiné à former un pare-brise de véhicule comprenne au moins deux couches métalliques. Lorsque le substrat revêtu est utilisé dans une telle structure, l'emploi d'une couche mince terminale telle que citée ci-dessus est souhaitable pour mettre le vitrage feuilleté à l'abri d'un éventuel délaminage.

Les couches métalliques d'un revêtement selon l'invention incorporé à un pare-brise de véhicule peuvent êtres reliées à une source de courant électrique de sorte qu'elles libèrent de la chaleur par effet joule. Dès lors, un tel pare-brise pourra aisément être dégivré ou désembué.

L'invention se rapporte également à un procédé de fabrication d'un produit tel que décrit précédemment, utilisant une technique de dépôt des couches de revêtement dudit produit par pulvérisation cathodique.

De préférence, chaque couche métallique est déposée sous une atmosphère oxydante, en particulier composée d'argon et d'oxygène. Dans des formes spécialement préférées de l'invention, l'atmosphère de dépôt de chaque couche métallique comprend moins de 10 % d'oxygène, de préférence de 3 à 7 %. Ces concentrations permettent d'obtenir une stabilité thermique desdites couches meilleure que celle de couches identiques déposées sous atmosphère inerte, tout en étant suffisamment faibles que pour éviter tout risque d'oxydation du métal durant son dépôt.

De préférence, les matériaux composant les couches diélectriques, hormis les sous-couches à base d'un alliage de deux métaux, sont déposées à partir de cathodes alimentées par un courant alternatif. Un tel procédé offre l'avantage de produire des couches de densité et de structure telles que ces couches s'opposent plus efficacement à la diffusion de sodium et d'oxygène dans l'empilement lors d'un traitement thermique de trempe ou de bombage, que lorsque des cathodes alimentées par un courant continu sont utilisées pour déposer les mêmes couches. Néanmoins, le bénéfice en termes de densité et de structure de couches n'est obtenu par le procédé en question qu'à partir d'une épaisseur de couche supérieure à celles des sous-couches à base d'un alliage de deux métaux. Pour cette raison, ces dernières ne sont pas déposées par ledit procédé.

L'invention sera maintenant décrite plus en détail, en se référant aux exemples non limitatifs qui suivent.

### EXEMPLES

Deux types d'échantillons de feuilles de substrat de verre sodocalcique clair, respectivement de 2,1 mm et de 4 mm d'épaisseur traversent un dispositif de dépôt en ligne comprenant cinq enceintes de dépôt sous vide (à une pression de 0,3 Pa), un convoyeur de substrat, des sources de puissance et des vannes d'admission de gaz. Chaque enceinte de dépôt contient des cathodes de pulvérisation assistée par magnétron, des entrées de gaz et une sortie d'évacuation, le dépôt étant obtenu par déplacement du substrat plusieurs fois sous les cathodes.

La première enceinte comprend deux cathodes pourvues de cibles formées de titane. Ces cathodes sont alimentées par une source de courant alternatif auxquelles elles sont raccordées de manière à fonctionner en alternance l'une de l'autre selon la fréquence du courant, pour déposer sous une atmosphère d'oxygène et d'argon une première couche d'oxyde de Ti. La deuxième enceinte comprend une cathode d'alliage de Ni et de Cr alimentée par une source de courant continu, pour déposer sous une atmosphère d'oxygène et d'argon une sous-couche non absorbante d'alliage sous-oxydé de Ni et de Cr. La troisième enceinte est identique à la première pour déposer une troisième sous-couche d'oxyde de Ti. La quatrième enceinte est subdivisée en deux compartiments. Le premier comprend une cathode d'Ag alimentée par une source de courant continu pour déposer sous une atmosphère d'argon et d'oxygène une couche d'Ag métallique, le second comprend une cathode d'alliage de Ni et de Cr alimentée par une source de courant continu, pour déposer sous une atmosphère d'oxygène et d'argon plus oxydante que celle du premier compartiment une sous-couche non absorbante d'alliage sous-oxydé de Ni et de Cr. La cinquième enceinte comprend deux cathodes de silicium alimentées par une source de courant alternatif, pour déposer sous une atmosphère d'azote une sous-couche non absorbante de nitrure de silicium. Cette séquence de chambres est répétée pour le dépôt d'un empilement comprenant deux couches métalliques.

Le tableau A rassemble les propriétés optiques et thermiques avant (numéros avec apostrophes) et après traitement thermique de substrats revêtus destinés à entrer dans la composition de vitrages multiples. Les épaisseurs données le sont en nm.

Dans ce cas, on dépose dans l'ordre sur un substrat de verre sodocalcique clair de 4 mm d'épaisseur:
une sous-couche non absorbante d'oxyde de titane,
une sous-couche de protection non-absorbante d'alliage sous-oxydé de nickel et de chrome dans un rapport massique 80/20,
une sous-couche non-absorbante d'oxyde de titane,
une couche d'argent
une sous-couche de protection non-absorbante d'alliage sous-oxydé de nickel et de chrome dans un rapport massique 80/20,
une sous-couche de nitrure de silicium.

Le substrat revêtu est ensuite soumis à un traitement thermique de trempe consistant en un préchauffage d'une durée de 3 min à 570°C suivi d'un chauffage de trempe d'une durée de 3 min à 700°C.

Le tableau B rassemble les propriétés optiques et thermiques avant (A) et après (A') traitement thermique d'un substrat revêtu d'un empilement non conforme à l'invention et destiné à entrer dans la composition de vitrages multiples. Cet empilement comprend des couches de protection de la couche métallique composées d'un alliage non oxydé de Ni et de Cr. Cet exemple comparatif montre qu'un tel empilement présente une émissivité ainsi qu'un niveau de voile plus élevés que les produits selon l'invention.

Le tableau C rassemble les propriétés optiques et thermiques avant (numéros avec apostrophes) et après traitement thermique de substrats revêtus destinés à entrer dans la composition de vitrages feuilletés. Les épaisseurs données le sont en nm.

Dans ce cas, on dépose dans l'ordre sur un substrat de verre clair sodocalcique clair de 2,1 mm d'épaisseur:
une sous-couche non absorbante d'oxyde de titane,
une sous-couche de protection non-absorbante d'alliage sous-oxydé de nickel et de chrome dans un rapport massique 80/20,
une sous-couche non-absorbante d'oxyde de titane,
une couche d'argent
une sous-couche de protection non-absorbante d'alliage sous-oxydé de nickel et de chrome dans un rapport massique 80/20,
une sous-couche de nitrure de silicium
une sous-couche d'oxyde de titane
une sous-couche de protection non-absorbante d'alliage sous-oxydé de nickel et de chrome dans un rapport massique 80/20,
une couche d'argent
une sous-couche de protection non-absorbante d'alliage sous-oxydé de nickel et de chrome dans un rapport massique 80/20,
une sous-couche de nitrure de silicium.

Le substrat revêtu est ensuite soumis à un traitement thermique de bombage à une température de 635°C pendant une durée de 12 min.

Il est alors incorporé à un panneau feuilleté comprenant, dans l'ordre, ledit substrat revêtu, une couche adhésive de polyvinylbutyral (PVB) d'une épaisseur de 0,76 mm et une seconde feuille de verre sodocalcique clair d'une épaisseur de 2,1 mm. L'exemple 17" donne les propriétés optique d'un vitrage feuilleté comprenant un substrat revêtu selon l'exemple 17.

Lorsque des empilements selon les exemples du tableau C sont destinés à être utilisés dans des vitrages multiples pour bâtiment, ils sont déposés sur un substrat de verre sodocalcique de 4 ou 6 mm d'épaisseur. Les propriétés optiques rassemblées dans ledit tableau demeurent identiques, à l'exception de la TLA qui baisse d'environ 0.5 % par mm d'accroissement de l'épaisseur du substrat.

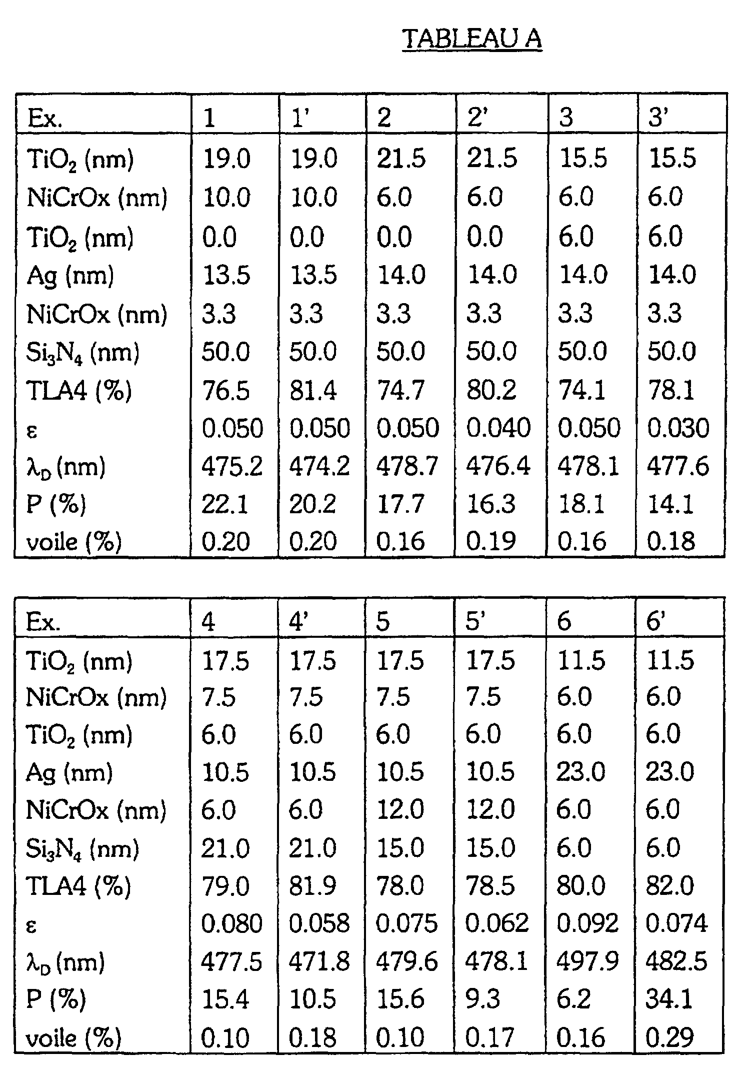

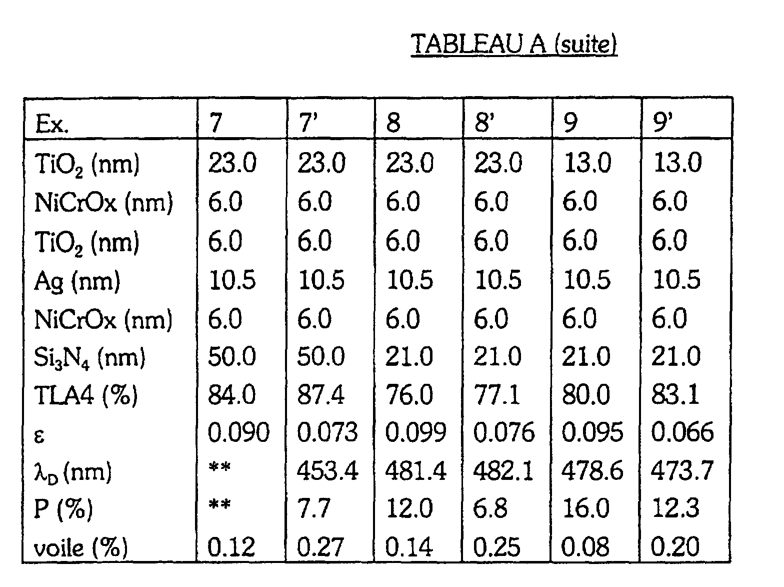

**TABLEAU B**

| Ex. | SnO2 (nm) | NiCr (nm) | Ag (nm) | NiCr (nm) | SnO2 (nm) | TLA4 (%) | ε | λ_{D} (nm) | P (%) | voile (%) |
|---|---|---|---|---|---|---|---|---|---|---|
| A | 38.0 | 1.2 | 10.5 | 1.2 | 46.0 | 68.0 | 0.090 | 474.5 | 14.5 | 0.20 |
| A' | 38.0 | 1.2 | 10.5 | 1.2 | 46.0 | 77.5 | 0.130 | 470.0 | 20.0 | 0.40 |
| N.B.: λ_{D} et P sont mesurées en réflexion côté empilement. | | | | | | | | | | |

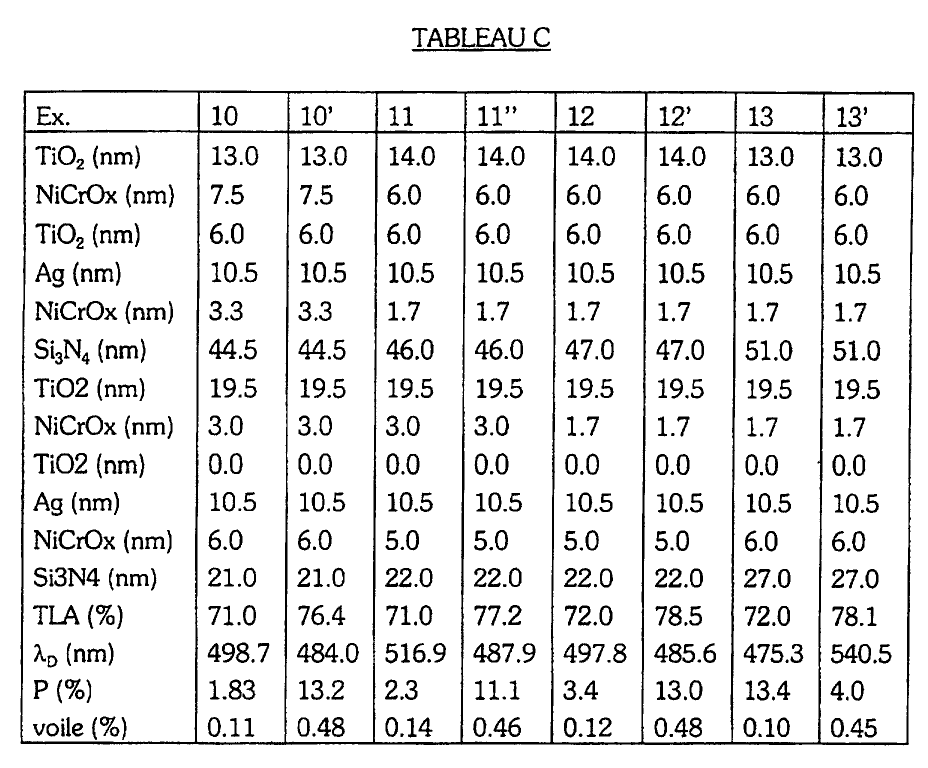

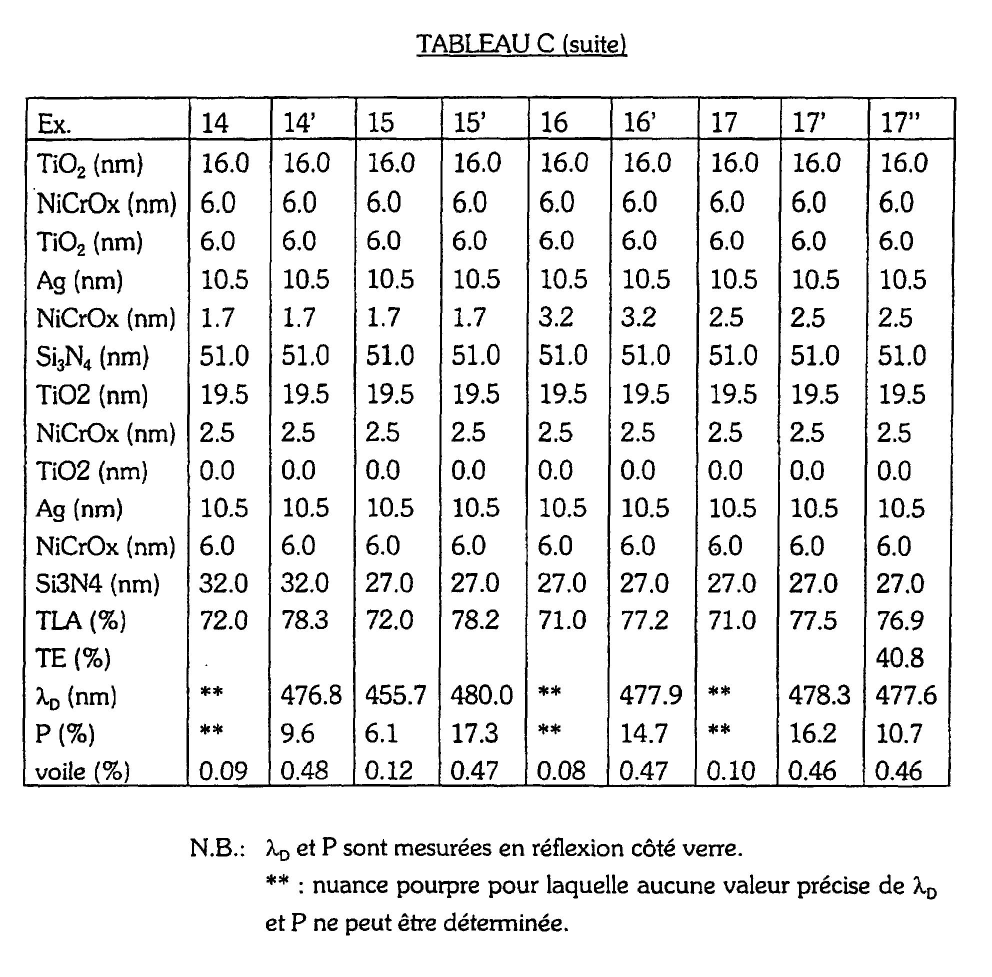

## Revendications

1. Substrat transparent portant un revêtement comprenant au moins une couche métallique constituée d'argent ou d'alliage d'argent, chaque couche métallique étant en contact avec deux couches diélectriques transparentes non absorbantes, le substrat revêtu étant destiné à subir un traitement thermique de type trempe ou bombage, **caractérisé en ce qu'**avant ledit traitement thermique, chacune des couches diélectriques comprend une sous-couche à base d'un alliage de deux métaux sous-oxydé.

2. Substrat transparent portant un revêtement selon la revendication 1, **caractérisé en ce que** ledit alliage est à base de Ni et de Cr.

3. Substrat transparent portant un revêtement selon l'une des revendications 1 et 2, **caractérisé en ce qu'**au moins une couche métallique dudit revêtement est en contact avec au moins une sous-couche sous-jacente d'un oxyde d'un métal choisi parmi le Ti, le Ta, le Nb et le Sn.

4. Substrat transparent portant un revêtement selon l'une des revendications 1 à 3, **caractérisé en ce qu'**au moins la sous-couche à base d'un alliage sous-oxydé de deux métaux la plus proche du substrat est en contact avec une sous-couche sous-jacente d'oxyde de Ti.

5. Substrat transparent portant un revêtement selon la revendication 4, **caractérisé en ce qu'**il comprend, dans l'ordre à partir du substrat, une couche diélectrique transparente non absorbante comprenant une sous-couche d'oxyde de Ti et une sous-couche à base d'un alliage de deux métaux sous-oxydé, une couche métallique constituée d'argent ou d'alliage d'argent et une couche diélectrique transparente non absorbante comprenant une sous-couche à base d'un alliage de deux métaux sous-oxydé.

6. Substrat transparent portant un revêtement selon l'une des revendications 1 à 5, **caractérisé en ce que** la couche diélectrique comprise entre le substrat et la première couche métallique est constituée de sous-couches d'oxydes de métaux et d'alliages de métaux.

7. Substrat transparent portant un revêtement selon l'une des revendications 1 à 6, **caractérisé en ce qu'**au moins une couche diélectrique comprend une sous-couche à base d'un nitrure.

8. Substrat portant un revêtement selon la revendication 7, **caractérisé en ce que** ledit nitrure est un nitrure de Si, d'Al ou d'un alliage de ces éléments.

9. Substrat transparent portant un revêtement selon l'une des revendications 1 à 8, **caractérisé en ce que** chaque couche métallique est constituée d'un alliage d'argent et de platine ou de palladium.

10. Substrat transparent portant un revêtement selon l'une des revendications 1 à 9, **caractérisé en ce que** ledit revêtement contient une seule couche métallique.

11. Substrat transparent portant un revêtement selon la revendication 10, **caractérisé en ce que** l'épaisseur optique de la couche diélectrique la plus proche du substrat est comprise entre 50 et 90 nm, celle de l'autre couche diélectrique entre 70 et 110 nm, celle des sous-couches à base d'un alliage de deux métaux entre 3 et 24 nm et l'épaisseur géométrique de la couche métallique entre 8 et 15 nm.

12. Substrat transparent portant un revêtement selon la revendication 11, **caractérisé en ce qu'**il présente après un traitement thermique de type trempe ou bombage, un niveau de voile inférieur à 0,3 % et une émissivité inférieure à 0,08, de préférence inférieure à 0,05.

13. Substrat transparent portant un revêtement selon la revendication 12, **caractérisé en ce que** durant un traitement thermique de type trempe ou bombage, sa transmission lumineuse sous illuminant A varie de moins de 10%, sa pureté de couleur en réflexion de moins de 5% et sa longueur d'onde dominante en réflexion de moins de 3 nm.

14. Substrat transparent portant un revêtement selon l'une des revendications 1 à 9, **caractérisé en ce que** ledit revêtement comprend deux couches métalliques.

15. Substrat transparent portant un revêtement selon la revendication 14, **caractérisé en ce qu'**il comprend, dans l'ordre à partir du substrat, une couche diélectrique transparente non absorbante comprenant une sous-couche d'oxyde de Ti et une sous-couche à base d'un alliage de deux métaux sous-oxydé, une couche métallique constituée d'argent ou d'alliage d'argent, une couche diélectrique transparente non absorbante comprenant une sous-couche à base d'un alliage de deux métaux sous-oxydé, une couche métallique constituée d'argent ou d'alliage d'argent et une couche diélectrique transparente non absorbante comprenant une sous-couche à base d'un alliage de deux métaux sous-oxydé

16. Substrat transparent portant un revêtement selon l'une des revendications 14 et 15, **caractérisé en ce que** l'épaisseur optique de la couche diélectrique la plus proche du substrat est comprise entre 50 et 80 nm, celle de la couche diélectrique la plus éloignée du substrat entre 40 et 70 nm, celle de la couche diélectrique intermédiaire entre 130 et 170 nm, celle des sous-couches à base d'un alliage de deux métaux entre 3 et 24 nm et l'épaisseur géométrique des couches métalliques entre 8 et 15 nm.

17. Substrat transparent portant un revêtement selon la revendication 16, **caractérisé en ce qu'**il présente après un traitement thermique de type trempe ou bombage, un niveau de voile inférieur à 0,5 % et une TLA supérieure à 76%.

18. Vitrage multiple **caractérisé en ce qu'**il comprend un substrat revêtu selon l'une des revendications 1 à 17.

19. Vitrage feuilleté **caractérisé en ce qu'**il comprend un substrat revêtu selon l'une des revendications 1 à 17.

20. Vitrage feuilleté selon la revendication 19, **caractérisé en ce qu'**il constitue un pare-brise de véhicule.

21. Pare-brise de véhicule selon la revendication 20, **caractérisé en ce que** les couches métalliques sont raccordées à une source de courant.

22. Procédé de fabrication d'un substrat transparent portant un revêtement selon la revendication 1, **caractérisé en ce que** les couches dudit revêtement sont déposées par pulvérisation cathodique.

23. Procédé selon la revendication 22, **caractérisé en ce que** chaque couche métallique est déposée sous une atmosphère oxydante.

24. Procédé selon la revendication 23, **caractérisé en ce que** ladite atmosphère comprend moins de 10% d'oxygène.

25. Procédé selon la revendication 24, **caractérisé en ce que** ladite atmosphère comprend de 3 à 7% d'oxygène.

26. Procédé selon l'une des revendications 22 à 25, **caractérisé en ce qu'**au moins une sous-couche de chaque couche diélectrique est déposée à partir de cathodes alimentées par un courant alternatif.

## Patentansprüche

1. Transparentes Substrat, das einen Beschichtungsstapel trägt, umfassend mindestens eine metallische Beschichtungsschicht, die Silber oder eine Silberlegierung umfaßt, wobei jede metallische Beschichtungsschicht in Kontakt mit zwei nicht absorbierenden, transparenten, dielektrischen Beschichtungsschichten steht, wobei das beschichtete Substrat eingerichtet ist, einer Wärmebehandlung vom Biege- oder Tempertyp zu widerstehen, **dadurch gekennzeichnet, daß** vor einer solchen Wärmebehandlung jede der dielektrischen Beschichtungsschichten eine Subschicht auf der Basis einer partiell oxidierten Kombination von zwei Metallen umfaßt.

2. , Transparentes Substrat, das einen Beschichtungsstapel trägt, gemäß Anspruch 1, **dadurch gekennzeichnet, daß** die Kombination von zwei Metallen auf Ni und Cr basiert.

3. Transparentes Substrat, das einen Beschichtungsstapel trägt, gemäß Anspruch 1 oder 2, **dadurch gekennzeichnet, daß** mindestens eine metallische Beschichtungsschicht des Beschichtungsstapels in Kontakt mit mindestens einer unterliegenden Subschicht eines Oxids eines Metalls, ausgewählt aus Ti, Ta, Nb und Sn, steht.

4. Transparentes Substrat, das einen Beschichtungsstapel trägt, gemäß einem der Ansprüche 1 bis 3, **dadurch gekennzeichnet, daß** mindestens die Subschicht auf der Basis einer partiell oxidierten Kombination von zwei Metallen, welche dem Substrat am nächsten ist, in Kontakt mit einer unterliegenden Subschicht eines Oxids von Titan steht.

5. Transparentes Substrat, das einen Beschichtungsstapel trägt, gemäß Anspruch 4, **dadurch gekennzeichnet, daß** es in der Reihenfolge von dem Substrat eine transparente, nicht absorbierende, dielektrische Schicht, umfassend eine Subschicht von Titanoxid und eine Subschicht auf der Basis einer Kombination von zwei partiell oxidierten Metallen, eine metallische Beschichtungsschicht, umfassend Silber oder eine Silberlegierung, und eine transparente, nicht-absorbierende, dielektrische Schicht, umfassend eine Subschicht auf der Basis einer Kombination von zwei partiell oxidierten Metallen, umfaßt.

6. Transparentes Substrat, das einen Beschichtungsstapel trägt, gemäß einem der Ansprüche 1 bis 5, **dadurch gekennzeichnet, daß** die dielektrische Beschichtungsschicht, die zwischen dem Substrat und der ersten metallischen Beschichtungsschicht angeordnet ist, Subschichten von Metalloxiden und von Oxiden von Kombinationen von Metallen umfaßt.

7. Transparentes Substrat, das einen Beschichtungsstapel trägt, gemäß einem der Ansprüche 1 bis 6, **dadurch gekennzeichnet, daß** mindestens eine dielektrische Beschichtungsschicht eine Subschicht auf der Basis eines Nitrids umfaßt.

8. Transparentes Substrat, das einen Beschichtungsstapel trägt, gemäß Anspruch 7, **dadurch gekennzeichnet, daß** das Nitrid ein Nitrid von Si, Al oder einer Kombination dieser Elemente ist.

9. Transparentes Substrat, das einen Beschichtungsstapel trägt, gemäß einem der Ansprüche 1 bis 8, **dadurch gekennzeichnet, daß** jede metallische Beschichtungsschicht eine Kombination von Silber und Platin oder Palladium umfaßt.

10. Transparentes Substrat, das einen Beschichtungsstapel trägt, gemäß einem der Ansprüche 1 bis 9, **dadurch gekennzeichnet, daß** der Beschichtungsstapel eine einzelne metallische Beschichtungsschicht enthält.

11. Transparentes Substrat, das einen Beschichtungsstapel trägt, gemäß Anspruch 10, **dadurch gekennzeichnet, daß** die optische Dicke der dielektrischen Beschichtungsschicht, die dem Substrat am nächsten ist, zwischen 50 und 90 nm, die der anderen dielektrischen Beschichtungsschicht zwischen 70 und 110 nm, die der Subschichten auf der Basis einer Kombination von zwei Metallen zwischen 3 und 24 nm, und die geometrische Dicke der metallischen Beschichtungsschicht zwischen 8 und 15 nm betragen.

12. Transparentes Substrat, das einen Beschichtungsstapel trägt, gemäß Anspruch 11, **dadurch gekennzeichnet, daß** nach einer Wärmebehandlung vom Temper- oder Biegetyp das Substrat eine Trübung von weniger als 0,3% und ein Emissionsvermögen von weniger als 0,08, vorzugsweise weniger 0,05 aufweist.

13. Transparentes Substrat, das einen Beschichtungsstapel trägt, gemäß Anspruch 12, **dadurch gekennzeichnet, daß** während einer Wärmebehandlung vom Temper- oder Biegetyp die Lichtdurchlässigkeit des Substrats unter dem Leuchtmittel A um weniger als 10% variiert, dessen Farbreinheit bezüglich der Reflexion um weniger als 5% variiert und dessen dominante Wellenlänge bezüglich der Reflexion um weniger als 3 nm variiert.

14. Transparentes Substrat, das einen Beschichtungsstapel trägt, gemäß einem der Ansprüche 1 bis 9, **dadurch gekennzeichnet, daß** der Beschichtungsstapel zwei metallische Beschichtungsschichten enthält.

15. Transparentes Substrat, das einen Beschichtungsstapel trägt, gemäß Anspruch 14, **dadurch gekennzeichnet, daß** es in der Reihenfolge von dem Substrat eine transparente, nicht-absorbierende, dielektrische Schicht, umfassend eine Subschicht von Titanoxid und eine Subschicht auf der Basis einer Kombination von zwei partiell oxidierten Metallen, eine metallische Beschichtungsschicht, umfassend Silber oder eine Silberlegierung, und eine transparente, nicht-absorbierende dielektrische Schicht, umfassend eine Subschicht auf der Basis einer Kombination von partiell oxidierten Metallen, eine metallische Beschichtungsschicht, umfassend Silber oder eine Silberlegierung, und eine transparente, nicht-absorbierende, dielektrische Schicht, umfassend eine Subschicht auf der Basis einer Kombination von zwei partiell oxidierten Metallen, umfaßt.

16. Transparentes Substrat, das einen Beschichtungsstapel trägt, gemäß den Ansprüchen 14 und 15, **dadurch gekennzeichnet, daß** die optische Dicke der dielektrischen Beschichtungsschicht, die dem Substrat am nächsten ist, zwischen 50 und 80 nm, die der dielektrischen Beschichtungsschicht, die am weitesten von dem Substrat beabstandet ist, zwischen 40 und 70 nm, die der intermediären dielektrischen Beschichtungsschicht zwischen 130 und 170 nm, die der Subschichten auf der Basis einer Zusammensetzung von zwei Metallen zwischen 3 und 24 nm und die geometrische Dicke der metallischen Beschichtungsschichten zwischen 8 und 15 nm betragen.

17. Transparentes Substrat, das einen Beschichtungsstapel trägt, gemäß Anspruch 16, **dadurch gekennzeichnet, daß** nach einer Wärmebehandlung vom Temper- oder Biegetyp das Substrat eine Trübung von weniger als 0,5% und eine TLA von mehr als 76% aufweist.

18. Mehrfachverglasung, **dadurch gekennzeichnet, daß** sie ein beschichtetes Substrat gemäß einem der Ansprüche 1 bis 17 umfaßt.

19. Laminierte Verglasung, **dadurch gekennzeichnet, daß** sie ein beschichtetes Substrat gemäß einem der Ansprüche 1 bis 17 umfaßt.

20. Laminierte Verglasung gemäß Anspruch 19, **dadurch gekennzeichnet, daß** sie eine Fahrzeugwindschutzscheibe aufbaut.

21. Fahrzeugwindschutzscheibe gemäß Anspruch 20, **dadurch gekennzeichnet, daß** die metallischen Beschichtungsschichten mit einer Stromquelle verbunden sind.

22. Verfahren zur Herstellung eines transparenten Substrats, das einen Beschichtungsstapel trägt, gemäß Anspruch 1, **dadurch gekennzeichnet, daß** die Beschichtungsschichten des Beschichtungsstapels durch Sputtem abgeschieden werden.

23. Verfahren gemäß Anspruch 22, **dadurch gekennzeichnet, daß** jede metallische Beschichtungsschicht in einer oxidierenden Atmosphäre abgeschieden wird.

24. Verfahren gemäß Anspruch 23, **dadurch gekennzeichnet, daß** die Atmosphäre weniger als 10% Sauerstoff umfaßt.

25. Verfahren gemäß Anspruch 24, **dadurch gekennzeichnet, daß** die Atmosphäre 3 bis 7% Sauerstoff umfaßt.

26. Verfahren gemäß einem der Ansprüche 22 bis 25, **dadurch gekennzeichnet, daß** mindestens eine Subschicht jeder dielektrischen Schicht von Kathoden abgeschieden wird, die mit Wechselstrom gespeist werden.

## Claims

1. Transparent substrate carrying a coating stack comprising at least one metallic coating layer comprising silver or a silver alloy, each metallic coating layer being in contact with two non-absorbent transparent dielectric coating layers, the coated substrate being adapted to withstand a bending or tempering type of heat treatment, **characterized in that** prior to such heat treatment, each of the dielectric coating layers comprises a sub-layer based on a partially oxidized combination of two metals.

2. Transparent substrate carrying a coating stack in accordance with claim 1, **characterized in that** the said combination of two metals is based on Ni and Cr.

3. Transparent substrate carrying a coating stack in accordance with claim 1 or claim 2, **characterized in that** at least one metallic coating layer of the said coating stack is in contact with at least an underlying sub-layer of an oxide of a metal selected from Ti, Ta, Nb and Sn.

4. Transparent substrate carrying a coating stack in accordance with any one of claims 1 to 3, **characterized in that** at least the sub-layer based on a partially oxidized combination of two metals which is closest to the substrate is in contact with an underlying sub-layer of an oxide of titanium.

5. Transparent substrate carrying a coating stack in accordance with claim 4, **characterized in that** it comprises, in order from the substrate, a transparent non-absorbent dielectric layer comprising a sub-layer of titanium oxide and a sub-layer based on a combination of two partially oxidized metals, a metallic coating layer comprising silver or a silver alloy and a transparent non-absorbent dielectric layer comprising a sub-layer based on a combination of two partially oxidized metals.

6. Transparent substrate carrying a coating stack in accordance with any one of claims 1 to 5, **characterized in that** the dielectric coating layer positioned between the substrate and the first metallic coating layer comprises sub-layers of metal oxides and of oxides of combinations of metals.

7. Transparent substrate carrying a coating stack in accordance with any one of claims 1 to 6, **characterized in that** at least one dielectric coating layer comprises a sub-layer based on a nitride.

8. Transparent substrate carrying a coating stack in accordance with claim 7, **characterized in that** the said nitride is a nitride of Si, Al, or a combination of these elements.

9. Transparent substrate carrying a coating stack in accordance with any one of claims 1 to 8, **characterized in that** each metallic coating layer comprises a combination of silver and platinum or palladium.

10. Transparent substrate carrying a coating stack in accordance with any one of claims 1 to 9, **characterized in that** the coating stack contains a single metallic coating layer.

11. Transparent substrate carrying a coating stack in accordance with claim 10, **characterized in that** the optical thickness of the dielectric coating layer closest to the substrate is between 50 and 90 nm, that of the other dielectric coating layer is between 70 and 110 nm, that of the sub-layers based on a combination of two metals is between 3 and 24 nm and the geometrical thickness of the metallic coating layer is between 8 and 15 nm.

12. Transparent substrate carrying a coating stack in accordance with claim 11, **characterized in that** after a tempering or bending type heat treatment the substrate has a haze of less than 0.3% and an emissivity of less than 0.08, preferably of less than 0.05.

13. Transparent substrate carrying a coating stack in accordance with claim 12, **characterized in that** during a tempering or bending type heat treatment the luminous transmittance of the substrate under Illuminant A varies by less than 10%, its color purity in reflection varies by less than 5% and its dominant wavelength in reflection varies by less than 3 nm.

14. Transparent substrate carrying a coating stack in accordance with any one of claim1 to 9, **characterized in that** the coating stack contains two metallic coating layer.

15. Transparent substrate carrying a coating stack in accordance with claim 14, **characterized in that** it comprises, in order from the substrate, a transparent non-absorbent dielectric layer comprising a sub-layer of titanium oxide and a sub-layer based on a combination of two partially oxidized metals, a metallic coating layer comprising silver or a silver alloy and a transparent non-absorbent dielectric layer comprising a sub-layer based on a combination of two partially oxidized metals, a metallic coating layer comprising silver or a silver alloy and a transparent non-absorbent dielectric layer comprising a sub-layer based on a combination of two partially oxidized metals.

16. Transparent substrate carrying a coating stack in accordance with claims 14 and 15, **characterized in that** the optical thickness of the dielectric coating layer closest to the substrate is between 50 and 80 nm, that of the dielectric coating layer spaced furthest from the substrate is between 40 and 70 nm, that of the intermediate dielectric coating layer is between 130 and 170 nm, that of the sub-layers based on a composition of two metals is between 3 and 24 nm and the geometrical thickness of the metallic coating layers is between 8 and 15 nm.

17. Transparent substrate carrying a coating stack in accordance with claim 16, **characterized in that** after a tempering or bending type of heat treatment the substrate has a haze of less than 0.5% and a TLA greater than 76%.

18. Multiple glazing **characterized in that** it comprises a coated substrate in accordance with any one of claims 1 to 17.

19. Laminated glazing **characterized in that** it comprises a coated substrate in accordance with any one of claims 1 to 17.

20. Laminated glazing in accordance with claim 19, **characterized in that** it constitutes a vehicle windshield.

21. Vehicle windshield in accordance with claim 20, **characterized in that** the metallic coating layers are connected to a current source.

22. Method of manufacturing a transparent substrate carrying a coating stack in accordance with claim 1, **characterized in that** the coating layers of the said coating stack are deposited by sputtering.

23. Method in accordance with claim 22, **characterized in that** each metallic coating layer is deposited in an oxidizing atmosphere.

24. Method in accordance with claim 23, **characterized in that** the said atmosphere comprises less than 10% oxygen.

25. Method in accordance with claim 24, **characterized in that** the said atmosphere comprises 3 to 7% oxygen.

26. Method in accordance with any one of claims 22 to 25, **characterized in that** at least one sub-layer of each dielectric layer is deposited from cathodes supplied with alternating current.
